# FASCICULE DE BREVET EUROPEEN

(11) **EP 0 466 531 B1**
(45) Date de publication et mention de la délivrance du brevet: **23.08.1995**
(21) Numéro de dépôt: 91401585.4
(22) Date de dépôt: 14.06.1991
(51) Int. Cl.: F16J 15/46, B60J 10/00, E06B 7/23

(54) **Joint d'étanchéité gonflable pour porte ou panneau coulissant**
Aufblasbare Dichtung für Tür oder Schiebewand
Inflatable seal for door or sliding panel

(30) Priorité: 10.07.1990 FR 9008725
(43) Date de publication de la demande: 15.01.1992
(73) Titulaire: LE JOINT FRANCAIS, Société en Nom Collectif, F-75008 Paris (FR)
(72) Inventeur: Colin, Olivier, F-95100 Argenteuil (FR)
(74) Mandataire: Ramey, Daniel

(56) Documents cités:
- EP-A- 0 237 770
- FR-A- 1 586 168

## Description

L'invention concerne un joint d'étanchéité gonflable pour porte ou panneau coulissant, par exemple une porte d'une voiture de chemin de fer, un panneau vitré, etc..

De tels joints sont utilisés lorsou'il faut établir une étanchéité entre une porte ou un panneau coulissant et une surface fixe le long de laquelle coulisse la porte ou le panneau.

Ces joints comprennent une partie tubulaire gonflable au moyen d'un fluide sous pression, cette partie étant formée d'une base de montage dans une gorge périphérique de la porte ou du panneau et d'une paroi élastiquement déformable par la pression de gonflage. Une lèvre souple, qui est en général gonflable en même temps que la partie tubulaire du joint, est solidaire de cette partie tubulaire et est destinée à s'appliquer sur la surface fixe le long de laquelle coulisse la porte ou le panneau.

Ces joints ne réalisent en fait une étanchéité que lorsqu'ils sont gonflés, c'est-à-dire lorsque la porte ou le panneau se trouve dans une position de fermeture. Le joint doit être dégonflé pour permettre le coulissement de la porte ou du panneau dans un sens et dans l'autre et ne réalise alors qu'une étanchéité nulle ou très faible.

En outre, ces joints ne sont pas protégés contre le vandalisme, car leurs parties tubulaires gonflables sont accessibles de l'extérieur et peuvent être perforées ou fendues relativement facilement, ce qui retire toute efficacité au joint.

Enfin, en cas de panne ou de défaut du système de gonflage, le joint n'apporte qu'une étanchéité faible ou sensiblement nulle.

Par le document EP-A-0 237 770, illustrant l'état de la technique tel que décrit dans le préambule de la revendication 1, on connaît aussi un joint gonflable du type auto-serrant par dépressurisation, comprenant deux lèvres qui sont appliquées élastiquement sur une surface fixe pour assurer l'étanchéité avec cette surface tant que le joint n'est pas gonflé et qui sont écartées de cette surface quand le joint est gonflé sous pression, ces lèvres étant formées par une paroi gonflable du joint qui n'est pas protégée contre les tentatives de vandalisme, par exemple de perforation.

L'invention a notamment pour but d'éviter les inconvénients des joints connus.

Elle a pour objet un joint d'étanchéité gonflable pour porte ou panneau coulissant, qui permette une bonne étanchéité à l'état non gonflé pour l'une et l'autre directions de coulissement de la porte ou du panneau et qui soit relativement bien protégé contre les actes de vandalisme tendant à perforer ou fendre sa partie tubulaire gonflable.

L'invention a également pour objet un joint du type précité, qui offre une étanchéité très élevée à l'état gonflé et qui s'oppose alors au déplacement de la porte ou du panneau, en réalisant un verrouillage de celui-ci.

L'invention propose un joint d'étanchéité gonflable pour porte ou panneau coulissant, comprenant une partie tubulaire gonflable au moyen d'un fluide sous pression, formée d'une base de montage dans une gorge périphérique de la porte ou du panneau et d'une paroi élastiquement déformable par la pression de gonflage, ainsi que deux lèvres souples destinées à s'appliquer sur une surface fixe le long de laquelle coulisse la porte ou le panneau, lesdites lèvres étant sensiblement symétriques par rapport à un plan médian longitudinal du joint et comportant chacune un rebord d'appui et de butée sur une surface correspondante de la porte du panneau, ce rebord s'opposant à un retournement de la lèvre lors de son frottement sur la surface fixe précitée, caractérisé en ce que les deux lèvres sont pleines et non gonflables et en ce qu'elles sont convergentes par rapport au plan médian longitudinal et recouvrent partiellement ladite paroi élastiquement déformable du joint.

Grâce à la présence de ces deux lèvres et de leur convergence par rapport au plan médian longitudinal du joint, le joint peut avoir la même efficacité pour l'un et l'autre sens de coulissement de la porte ou du panneau. L'inclinaison des lèvres par rapport au plan longitudinal médian du joint permet une étanchéité particulièrement efficace d'une lèvre pour un sens de déplacement, et de l'autre lèvre pour le sens de déplacement opposé. Les rebords d'appui et de butée formés sur les lèvres empêchent leur retournement, en dépit de leur frottement sur la surface fixe lors du coulissement de la porte ou du panneau.

En outre, grâce à la convergence des lèvres, l'encombrement du joint est diminué et la partie gonflable du joint est protégée contre les tentatives de perforation ou de découpe.

Avantageusement, la face extérieure de chaque lèvre comprend au moins une fente ou rainure mince longitudinale dont la profondeur est égale à une fraction notable de l'épaisseur de la lèvre.

La présence de cette fente ou de cette rainure permet de réduire la pression exercée par le bord libre de la lèvre sur la surface fixe contre laquelle elle se déplace. On réduit ainsi la friction de la lèvre sur la surface fixe, pour un sens donné de déplacement de la porte ou du panneau.

Pour réduire cette friction, on peut également prévoir que le bord libre de chaque lèvre comporte un revêtement de matière à propriété anti-friction.

Enfin, l'invention prévoit également que, à l'état gonflé du joint, sa paroi élastiquement déformable vient s'appliquer sur les faces internes desdites lèvres et bloque celles-ci sur la surface fixe contre laquelle coulisse la porte ou le panneau, ce oui a pour effet de réaliser une étanchéité très poussée ainsi qu'un blocage en position de la porte ou du panneau.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
la figure 1 représente schématiquement, en coupe transversale, un joint d'étanchéité selon l'invention, à l'état non gonflé ;
la figure 2 est une vue semblable à la figure 1, représentant le joint à l'état gonflé.

Le joint d'étanchéité représenté schématiquement aux dessins, est destiné à équiper une porte ou un panneau 10 coulissant le long d'une surface fixe 12. Le joint selon l'invention comprend une partie tubulaire gonflable 14 qui est formée d'une base 16 à section sensiblement en U, montée dans une gorge périphérique 18 de la porte ou du panneau, débouchant en regard de la surface fixe 12 précitée, et d'une paroi 20 élastiquement déformable qui ferme la base 16 et qui, au repos, a en section transversale une forme incurvée convexe, cette paroi élastiquement déformable 20 étant située du côté de la surface fixe 12 précitée.

Les deux flancs de la base 16 comprennent chacun un rebord extérieur 22, qui engage un épaulement correspondant 24 d'un flanc de la gorge 18 et qui permet de retenir le joint en position dans cette gorge. Le joint peut également être fixé par collage à l'intérieur de la gorge 18.

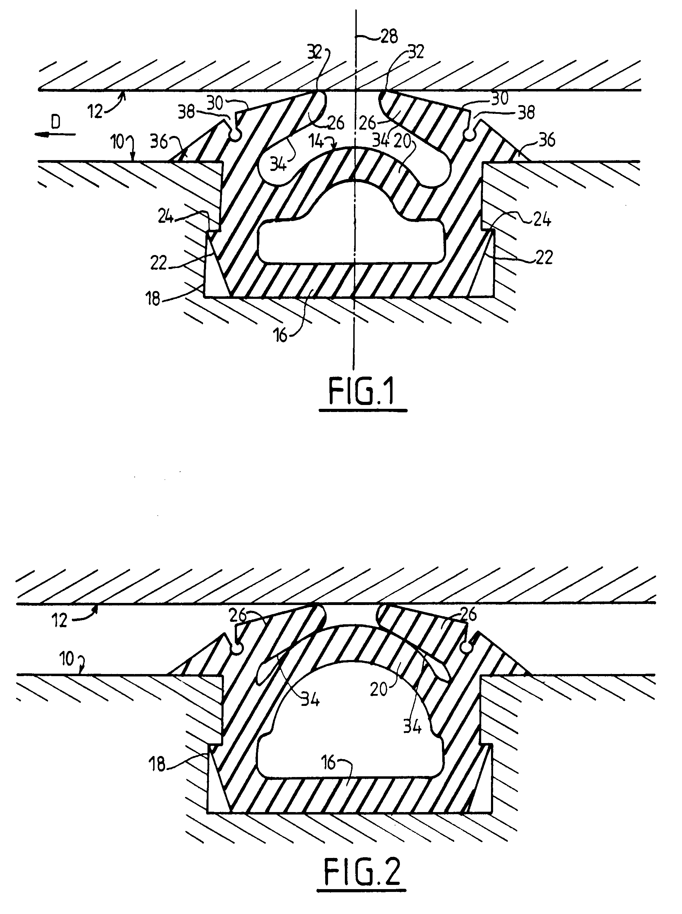

Le joint selon l'invention comprend encore deux lèvres 26 sensiblement identiques, qui sont sensiblement symétriques par rapport au plan longitudinal médian du joint, dont la trace est désignée en figure 1 par la référence 28, et qui sont inclinées par rapport à ce plan, en s'étendant à l'extérieur en direction de la surface fixe 12.

De préférence, les deux lèvres 26 sont convergentes et viennent recouvrir partiellement la paroi élastiquement déformable 20 du joint.

Chaque lèvre 26 a une forme sensiblement triangulaire en section transversale et comprend une grande face extérieure 30 réunie par un bord arrondi 32 à une face intérieure 34. Du côté de la base 36, la grande face extérieure 30 de la lèvre est prolongée en un rebord 36 en appui sur le bord correspondant de la gorge 18 de la porte ou du panneau. Enfin, une ou plusieurs fentes ou rainures longitudinales 38 sont formées dans la grande face extérieure 30 de chaque lèvre, en ayant une profondeur égale à une fraction notable, par exemple 50%, de l'épaisseur de la lèvre à cet endroit.

Comme représenté au dessin, chaque fente 38 peut déboucher par son sommet, dans une rainure longitudinale circulaire, formée au milieu de l'épaisseur de la lèvre.

Quand le joint selon l'invention est à l'état non gonflé, comme représenté en figure 1, les lèvres 26 sont en appui par leur bord arrondi 32 sur la surface fixe 12 et sont légèrement fléchies l'une vers l'autre. Quand la porte 10 est déplacée dans la direction indiquée par la flèche D, la lèvre 26 de gauche n'oppose qu'une résistance très faible à ce déplacement et, si besoin est, fléchit facilement vers la partie tubulaire gonflable 14 du joint, en raison de la présence de la ou des fentes 38 de sa surface extérieure 30. L'autre lèvre 26 (celle de droite sur le dessin) a tendance à frotter de façon plus importante, par son bord arrondi 32, sur la surface fixe 12, en raison de son inclinaison. Cependant, toute tendance au retournement de cette lèvre 36 dans la direction opposée à la direction de déplacement, est contrariée par le rebord 36 de cette lèvre, qui est en appui sur le bord correspondant de la gorge 18. De plus, tout déplacement relatif de la lèvre 26 dans le sens du retournement provoque la fermeture de la ou des fentes 38 de sa face extérieure 30, de sorte que la lèvre se présente alors comme un bloc plein et relativement épais arc-bouté sur le bord de la gorge 18. Dans ces conditions, le retournement d'une lèvre 26 est à peu près impossible.

Pour réduire la friction des bords arrondis 32 des lèvres sur la surface fixe 12, on peut prévoir que ces bords arrondis seront recouverts d'une couche de matière à propriété anti-friction telle par exemple que du "Teflon" (marque déposée) ou analogue, ou bien que ce bord sera lui-même, au moins en partie, réalisé en une matière à faible coefficient de frottement.

Lorsque le panneau ou la porte est déplacé dans la direction opposée à celle indiquée par la flèche D, les rôles précédemment décrits des deux lèvres 26 sont inversés.

Lorsque la porte 10 est dans sa position de fermeture, le joint est gonflé par amenée de fluide (en général d'air) sous pression dans la partie tubulaire 14, ce qui a pour effet de provoquer l'allongement de la paroi élastiquement déformable 20 qui vient s'appliquer sur les faces internes 34 des deux lèvres 26 et bloque celles-ci en appui sur la surface fixe 12. Dans ces conditions, le déplacement de la porte devient très difficile.

Les lèvres 26 du joint selon l'invention ont donc pour effet de protéger la partie gonflable 14 de celui-ci, en empêchant l'accès à cette partie gonflable lorsqu'on introduit une pointe ou une lame de couteau dans l'espace compris entre la porte 10 et la surface fixe 12.

Ces lèvres ont également pour effet d'assurer une étanchéité, à l'état non gonflé du joint, entre la porte 10 et la surface fixe 12 dans les deux directions de déplacement de la porte. Il en résulte qu'une certaine étanchéité subsiste même en cas de panne ou de défaillance du système de gonflage du joint.

Enfin, à l'état gonflé du joint, elles assurent une très bonne étanchéité et un verrouillage ou blocage en position de la porte.

Le joint selon l'invention peut être réalisé en toute matière appropriée, notamment en élastomère ou en caoutchouc. Il peut inclure, si on le souhaite, des tissus ou des fibres de renforcement.

## Revendications

1. Joint d'étanchéité gonflable pour porte ou panneau coulissant, comprenant une partie tubulaire (14) gonflable au moyen d'un fluide sous pression, formée d'une base (16) de montage dans une gorge périphérique (18) de la porte ou du panneau et d'une paroi (20) élastiquement déformable par la pression de gonflage, ainsi que deux lèvres souples (26) destinées à s'appliquer sur une surface fixe (12) le long de laquelle coulisse la porte ou le panneau, lesdites lèvres (26) étant sensiblement symétriques par rapport à un plan médian longitudinal (28) du joint et comportant chacune un rebord (36) d'appui et de butée sur une surface correspondante de la porte du panneau, ce rebord (36) s'opposant à un retournement de la lèvre lors de son frottement sur la surface fixe (12) précitée, caractérisé en ce que les deux lèvres (26) sont pleines et non gonflables et en ce qu'elles sont convergentes par rapport au plan médian longitudinal (28) et recouvrent partiellement ladite paroi élastiquement déformable (20) du joint.

2. Joint selon la revendication 1, caractérisé en ce que le rebord (36) d'appui et de butée de chaque lèvre est constitué par un prolongement de la face extérieure (30) de la lèvre, à son extrémité située du côté de la base (16) du joint, et est destiné à s'appliquer sur un bord de la gorge (18) de montage du joint.

3. Joint selon l'une des revendications précédentes, caractérisé en ce que la face extérieure (30) de chaque lèvre comprend au moins une fente ou rainure mince longitudinale (38), dont la profondeur est égale à une fraction notable de l'épaisseur de la lèvre.

4. Joint selon l'une des revendications précédentes, caractérisé en ce que, a l'état gonflé, la paroi élastiquement déformable (20) du joint vient s'appliquer sur les faces internes (34) des lèvres (26).

5. Joint selon l'une des revendications précédentes, caractérisé en ce que chaque lèvre (26) a une forme sensiblement triangulaire en section transversale et comprend un bord libre (32) à section arrondie d'appui et de frottement sur ladite surface fixe (12).

6. Joint selon la revendication 5, caractérisé en ce que le bord libre (32) de chaque lèvre (26) comporte un revêtement de matière à propriétés anti-friction.

## Claims

1. An inflatable sealing gasket for a sliding door or panel, the gasket comprising a tubular portion (14) that is inflatable by means of a fluid under pressure, comprising a base (16) for mounting in a peripheral groove (18) of the door or panel, and a wall (20) that is elastically deformable by the inflation pressure, together with two flexible lips (26) for bearing against a fixed surface (12) along which the door or panel slides, said lips (26) being substantially symmetrical about a longitudinal midplane (28) of the gasket, and each including a rim (36) for thrust and abutment against a corresponding surface of the door of the panel, said rim opposing folding over of the lip while it is rubbing against the above-specified fixed surface (12), the gasket being characterized in that both lips (26) are solid and not inflatable, and in that they converge about the longitudinal midplane (28) and overlie part of said elasticity deformable wall (20) of the gasket.

2. A gasket according to claim 1, characterized in that the thrust and abutment rim (36) of each lip is constituted by an extension of the outside face (30) of the lip at its end situated adjacent to the base (16) of the gasket, and is designed to press against an edge of the groove (18) in which the gasket is mounted.

3. A gasket according to either preceding claim, characterized in that the outside face (30) of each lip includes at least one longitudinal thin groove or slot (38) of a depth equal to a significant fraction of the thickness of the lip.

4. A gasket according to any preceding claim, characterized in that when in the inflated state the elastically deformable wall (20) of the gasket bears against the inside faces (34) of the lips (26).

5. A gasket according to any preceding claim, characterized in that each lip (26) is substantially triangular in cross-section and includes a free edge (32) of rounded section for bearing and rubbing against said fixed surface (12).

6. A gasket according to claim 5, characterized in that the free edge (32) of each lip (26) includes a coating of material having anti-friction properties.

## Patentansprüche

1. Aufblasbare Dichtung für eine Tür oder eine verschiebbare Platte, die einen röhrenförmigen, mittels eines Fluids unter Druck aufblasbaren Teil (14) umfaßt, in der Form einer Basis (16) zum Anbringen in einem peripheren Einschnitt (18) der Tür oder der Platte, und eine durch den Druck beim Aufblasen elastisch verformbaren Wand (20), so daß zwei weiche Lippen (26), die dazu vorgesehen sind, sich an eine feste Oberfläche (12) anlegen, entlang derer die Türe oder die Platte gleitet, wobei die besagte Lippen (26), bezogen auf eine longitudinale seitenhalbierende Ebene (28) der Dichtung, annähernd symmetrisch sind und jeweils einen Dichtrand (36) als Auflager und Anschlag auf einer korrespondierenden Oberfläche der Tür oder der Platte besitzen, wobei sich dieser Dichtrand (36) einem Umstülpen der Lippe während ihres Entlangreibens auf der vorgenannten festen Oberfläche (12) entgegensetzt, dadurch gekennzeichnet, daß die beiden Lippen (26) Vollmaterial und nicht aufblasbar sind und dadurch, daß sie, bezogen auf die longitudinale seitenhalbierende Ebene (28), konvergent sind und teilweise die besagte elastisch verformbare Wand (20) der Dichtung bedecken.

2. Dichtung nach Anspruch 1, dadurch gekennzeichnet, daß der Dichtrand (36) als Auflager und Anschlag jeder Lippe von einer Verlängerung der äußeren Seite (30) der Lippe an ihrem Ende, das sich auf der Seite der Basis (16) der Dichtung befindet, gebildet wird, und dazu vorgesehen ist, sich an einen Rand des Montageeinschnitts (18) der Dichtung anzudrücken.

3. Dichtung nach einem der vorherigen Ansprüche, dadurch gekennzeichnet, daß die Außenseite (30) jeder Lippe mindestens eine Kerbe oder schmale Längsrille (38) umfaßt, deren Tiefe einem merklichen Bruchteil der Dicke der Lippe entspricht.

4. Dichtung nach einem der vorherigen Ansprüche, dadurch gekennzeichnet, daß in aufgeblasenem Zustand sich die elastisch verformbare Wand (20) der Dichtung an die Innenseiten (34) der Lippen (26) anlegt.

5. Dichtung nach einem der vorherigen Ansprüche, dadurch gekennzeichnet, daß jede Lippe (26) eine annähernd dreieckige Form im Querschnitt hat und einen freien Rand (32) mit abgerundetem Querschnitt zum Anlegen und zum Entlangreiben auf der besagten festen Oberfläche (12).

6. Dichtung nach Anspruch 5, dadurch gekennzeichnet, daß der freie Rand (32) jeder Lippe (26) mit einem Überzug aus einem Material mit reibungsverringemden Eigenschatten versehen ist.
